**Europäisches Patentamt**

**European Patent Office**

**Office européen des brevets**

(11) Veröffentlichungsnummer: **0 020 852**
**A1**

(12) # EUROPÄISCHE PATENTANMELDUNG

(21) Anmeldenummer: **80101016.6**

(22) Anmeldetag: **29.02.80**

(51) Int. Cl.³: **G 01 N 3/16**

(30) Priorität: **15.06.79 DE 7917161 U**

(43) Veröffentlichungstag der Anmeldung: **07.01.81**
**Patentblatt 81/1**

(84) Benannte Vertragsstaaten: **AT BE CH DE FR GB IT LU NL SE**

(71) Anmelder: **DECHEMA Deutsche Gesellschaft für chemisches Apparatewesen e.V., Theodor-Heuss-Allee 25, D-6000 Frankfurt am Main 97 (DE)**

(72) Erfinder: **Kalfa, Horst, Dipl.-Ing., Schlossstrasse 126, D-6000 Frankfurt am Main 90 (DE)**
Erfinder: **Schubert, Bruno, Westendstrasse 71, D-6070 Langen (DE)**
Erfinder: **Brunmayer, Peter, Hattsteiner Allee 9, D-6390 Usingen (DE)**
Erfinder: **Gellermann, Siegfried, Hindenburgstrasse 30, D-6500 Mainz (DE)**

(74) Vertreter: **Beil, Walter, Dr. et al, BEIL, WOLFF & BEIL Rechtsanwälte Adelonstrasse 58, D-6230 Frankfurt am Main 80 (DE)**

(54) Vorrichtung zur Prüfung von Werkstoffen auf Spannungsrisskorrosionsanfälligkeit.

(57) Vorrichtung zur Prüfung von Werkstoffen auf Spannungsrißkorrosionsanfälligkeit mit mehr als zwei Zugeinheiten, die jede aus einer Grundplatte (3), zwei Führungsstangen (2), einem oberen und einem unteren Querhaupt (14), die Probenschnellkupplungen aufweisen, einer Klemmvorrichtung (6) für die Führung des unteren Querhauptes und einem Verbindungsflansch (13) zwischen unterem Querhaupt und der die Dehnung bewirkenden Gewindestange (14) besteht, dem Antriebsverteilungsblock zum Antrieb der Gewindestange und dem diesen und einem zwischengeschalteten Aufsteckgetriebe vorgelagerten Motorgetriebe, bestehend aus zwei Schrittmotoren (41, 42), den von diesen angetriebenen Sonnenrädern und den dadurch bewegten Planetenrädern, die über einen Steg die Antriebswelle (21) antreiben.

Insbesondere betrifft die Erfindung eine Vorrichtung mit sechs Zugeinheiten, die eine automatische Endabschaltung und im Antriebsverteilungsblock eine Hubvorrichtung für die Abtrennung der Antriebsräder vom Restsystem aufweisen. Die Drehzahl der Schrittmotoren kann durch elektrisch erzeugte Schrittfrequenz gesteuert werden, wobei die Steuereinheit gegebenenfalls aus einem Mikroprozessor und einem Speichergerät bestehen kann.

unsere Nr. 22 563

DECHEMA Deutsche Gesellschaft für
chemisches Apparatewesen e.V.

Theodor-Heuss-Allee 25
6000 Frankfurt am Main 97

VORRICHTUNG ZUR PRÜFUNG VON WERKSTOFFEN AUF
SPANNUNGSRISSKORROSIONSANFÄLLIGKEIT

Versuche zur Prüfung von Werkstoffen auf Spannungsrißkorrosionsanfälligkeit wurden bisher mit sogenannten
Constant-Strain-Rate-Maschinen (CSR-Maschinen) durchgeführt, die eine Probe mit einer konstanten Dehngeschwindigkeit, in neuerer Zeit auch mit zyklischer
Belastung, bis zum Bruch belasten. Die Probe wird
dabei in Probenhalterung eingebaut und durch Abwärtsbewegung eines unteren Querhauptes belastet. In einem
oberen Querhaupt ist die obere Probenhalterung befestigt und ein mittleres Querhaupt dient zur Führung
des unteren Querhauptes. Die Bewegungen des unteren
Querhauptes, die die CSR-Maschine durch die vorhandenen
Getriebe und den Antriebsmotor durchführen kann, sind
proportional der Dehnung der Probe.

Die Arbeitsweise der Maschine ist rein durch konstruktive Merkmale bestimmt, berücksichtigt jedoch nicht
die Bedürfnisse der praktischen Anwender. Der
praktische Bereich, in dem CSR-Maschinen eingesetzt
werden, setzt sich aus den Gebieten

a) Werkstoffentwicklung
b) Prüfung der Einsatzmöglichkeiten für Werkstoffe
c) Qualitätsüberwachung

zusammen. Die dort gestellten Anforderungen erfüllen
die bisherigen CSR-Maschinen nicht oder zumindest
nur unvollkommen.

In der Werkstoffentwicklung und bei der Prüfung für
mögliche Einsatzgebiete ist es notwendig, den
Werkstoff unter praxisnahen Bedingungen zu prüfen.
An Aggregaten auftretende Belastungsfälle müssen
im Labor reproduzierbar simuliert werden.

Dazu ist es notwendig, das Querhaupt einer CSR-
Maschine mit Hilfe von Motor und Getriebe in den durch
die Praxis abgegebenen Balstungsfunktionen zu verfahren, d.h. das Querhaupt muß eine stufenlos
regelbare Auf- und Abwärtsbewegung durchführen.
Für Motor und Getriebe ergibt sich daraus die
Forderung, stufenlos regelbare Drehzahlen in positiver
und negativer Drehrichtung abzugeben. Dies ist mit
bereits bekannten Konstruktionen nicht möglich.

Bei der Prüfung der Einsatzmöglichkeiten an Werkstoffen ist es wichtig, dem Konstrukteur Werkstoffkennwerte an die Hand zu geben, die den Einsatz des
richtigen Werkstoffes erlauben.

Zur Bestimmung dieser Kennwerte wird heute die Bruchmechanik eingesetzt. Man fährt Zugversuche an angebrochenen Zugproben oder sog. CT-Proben und bestimmt das Rißwachstum bei konstanter Belastung. Dafür muß man eine belastete Probe entsprechend dem gemessenen Rißwachstum entlasten. Als Forderung an die Maschine ergibt sich daraus das Problem, das elektronische Signal für das Rißwachstum in einen proportionalen Entlastungsvorgang der Probe umzusetzen. Mit den bekannten Maschinen ist dies nicht möglich.

Mit der Qualitätsüberwachung von Werkstoffen sind umfangreiche Routineuntersuchungen verbunden. Da die relativ langen Versuchszeiten, von im Durchschnitt 3 Tagen, einen sehr großen Maschinenpark erfordern, ergibt sich nicht zuletzt aus Kostengründen die Forderung nach mehreren Zugeinheiten pro Maschine. Solche Maschinen gibt es bisher nicht.

Die genannten Nachteile werden durch eine erfindungsgemäße CSR-Maschine behoben, die pro Maschine mehrere Zugeinheiten aufweist, bei der die Drehzahl der Antriebseinheit in positiver und negativer Drehrichtung stufenlos regelbar ist und die Regelung der Drehzahl durch ein elektronisches Signal erfolgen kann.

Die erfindungsgemäße CSR-Maschine setzt sich aus 4 Hauptelementen, nämlich

1. den Zugeinheiten
2. dem Antriebsverteilungsblock
3. dem Aufsteckgetriebe
4. dem Motor-Getriebesystem

zusammen und wird im folgenden anhand der Zeichnungen im einzelnen beschrieben.

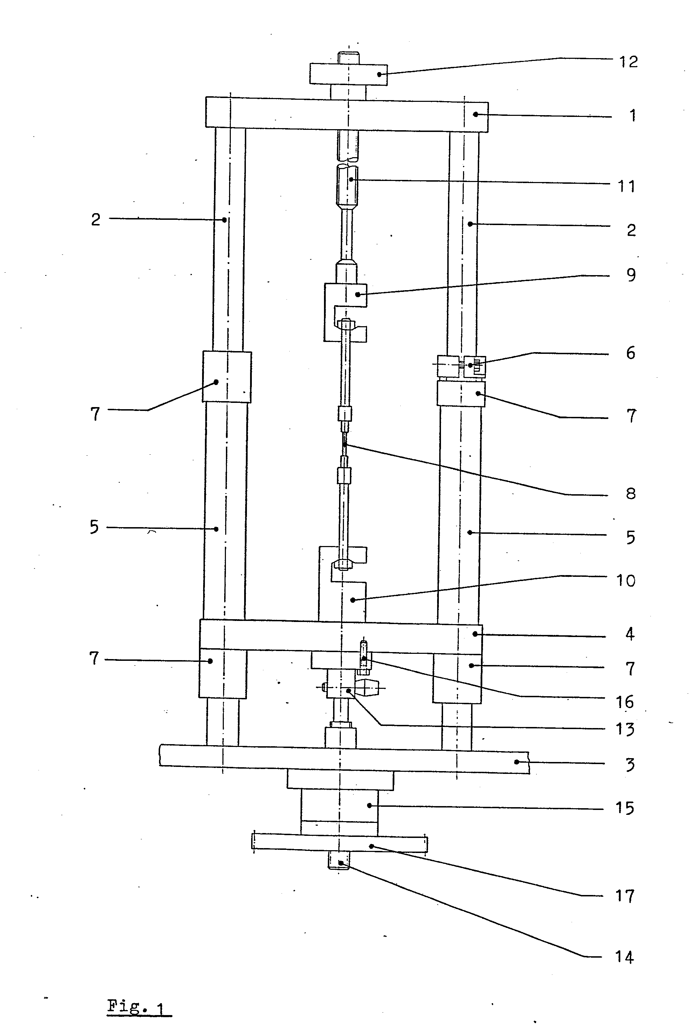

Die in Fig. 1 dargestellte Zugeinheit besteht aus einem Rahmen, der sich aus dem oberen Querhaupt (1), den beiden Führungsstangen (2) und der Grundplatte (3) zusammensetzt. In diesem Rahmen läuft das untere Querhaupt (4), geführt durch die Rohrführung (5). Die Rohrführung (5) kann durch die Klemmvorrichtung (6), bestehend aus einer geschlitzten Führungsmutter (7), beim Ein- und Ausbau der Probe (8) blockiert werden. Die Probe (8) hängt in den oberen und unteren Schnellkupplungsköpfen (9) und (10) der oberen Probenhalterung (11) und des Querhauptes (4). Die obere Probenhalterung (11) besteht aus einer Gewindestange, die durch eine kugelförmige Mutter (12) im Querhaupt (1) höhenverstellbar gelagert ist. Das Querhaupt (4), das durch Absenken die Probe belastet, ist über den Flansch (13) mit der Gewindestange (14) durch einen Stift mit der Abzugsmutter (15) verbunden. Am Flansch (13) kann unter Zugbelastung durch Lösen von 3 Schrauben (16) der Kraftfluß unterbrochen werden. Dies ermöglicht den Ausbau der Probe (8) vor dem Bruch. Der Antrieb der Abzugsmutter (15) erfolgt über das Zahnrad (17) vom Antriebsverteilungsblock her.

Die Anzahl der Zugeinheiten beträgt mehr als 2 und wird nur aus räumlichen und arbeitstechnischen Gründen nach oben begrenzt. Eine Vorrichtung mit 6 oder 8 Zugeinheiten wird deshalb bevorzugt.

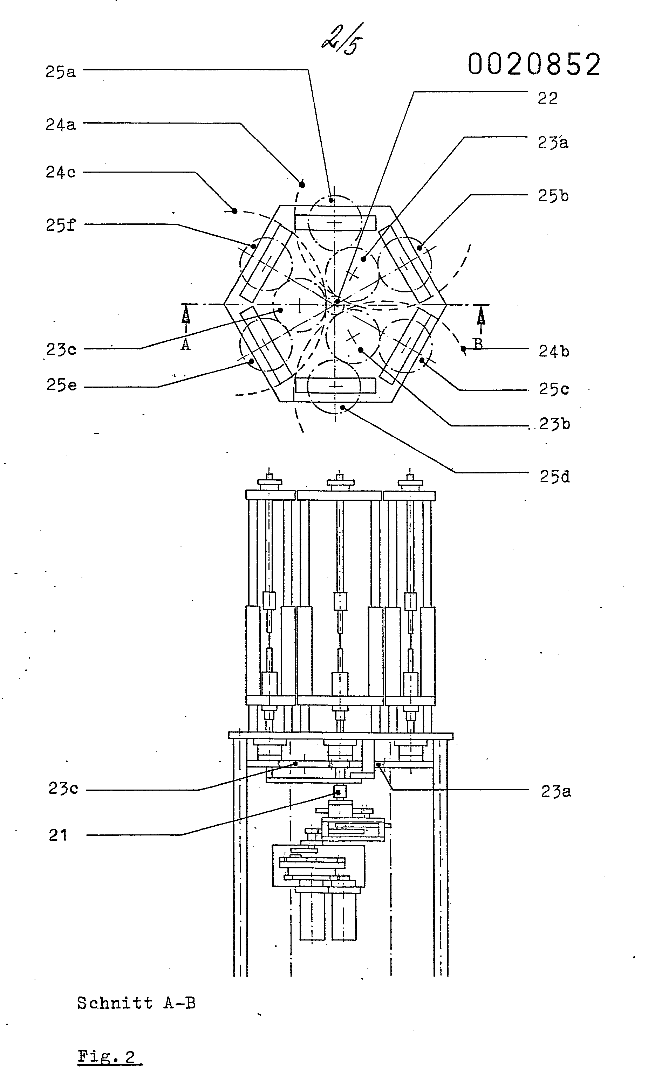

Der Antriebsverteilungsblock ist in Fig. 2 dargestellt und besteht aus einer Kombination von Zahnrädern, die sich ausgehend von der Antriebswelle des Aufsteckgetriebes wie folgt aufbaut: Die Antriebswelle (21) mit dem Zahnrad (22) überträgt den Kraftfluß auf die Antriebsräder (23). Größe und Anzahl der Antriebsräder (23) bestimmen die Anzahl der Zugeinheiten.

Die Antriebsräder (23) können als normale Standgetriebe ausgelegt werden und so zu einer festen Geschwindigkeitsstaffelung der Antriebseinheiten (24) beitragen. Die Antriebseinheit (24) besteht dann aus einem Antriebsrad und 2 Antriebsrädern der Abzugsmuttern (25).

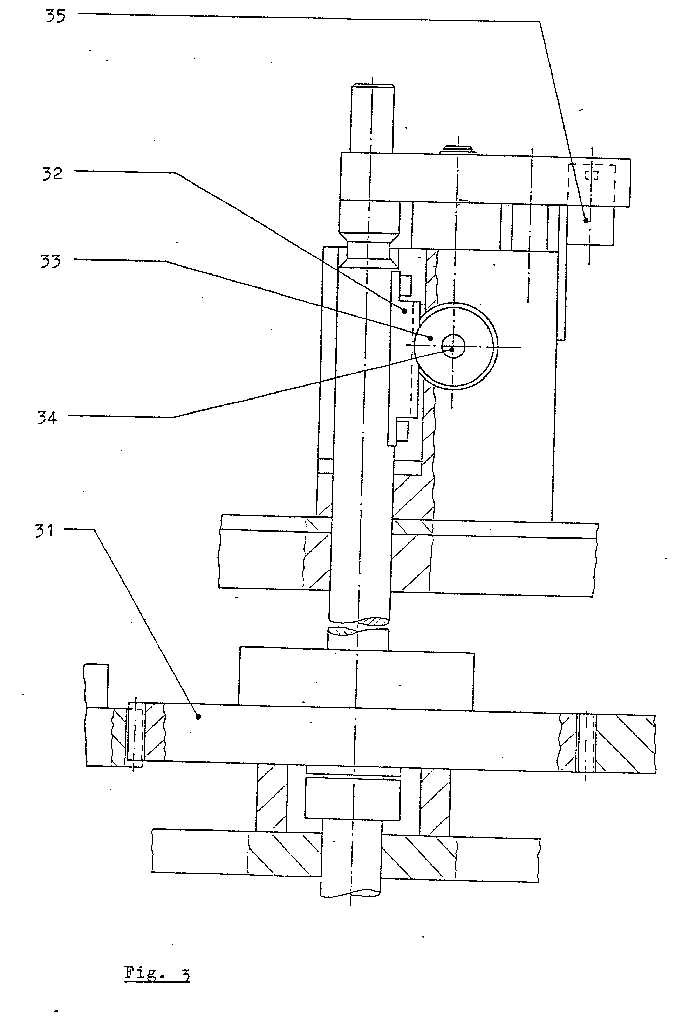

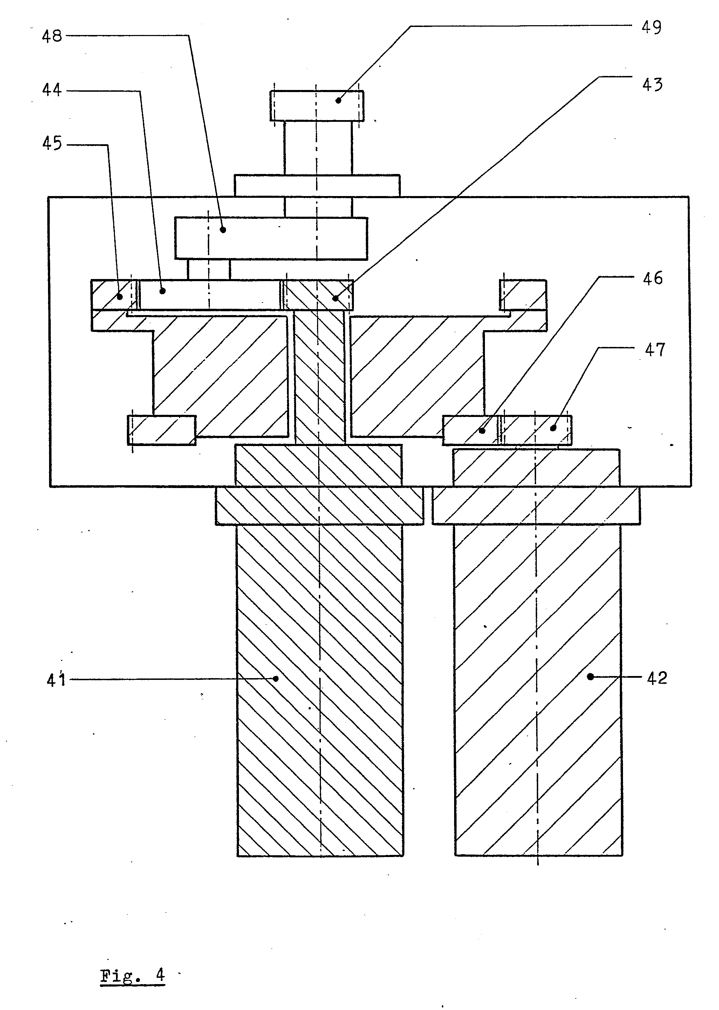

Die Antriebsräder (23) lassen sich durch eine in Fig. 3 dargestellte Hubvorrichtung aus dem Kraftfluß entfernen und ermöglichen so den kontinuierlichen Lauf der restlichen Antriebsräder (23). Auf der verlängerten Welle des Antriebsrades ist eine Zahnstange (32) angebracht, in die ein von einem Hubmotor über der Motorwelle (34) angetriebenes Zahnrad (37) eingreift. Der Hubmotor kann über den Endschalter (54), den Endschalter (35) und einen nicht gezeigten Druckschalter gesteuert werden.

Das Aufsteckgetriebe besteht aus der Kombination mehrerer Zahnräder entsprechend einem normalen Standgetriebe. Es wird zur Reduzierung der Drehzahl und zur Erhöhung des Abzugsmomentes eingesetzt.

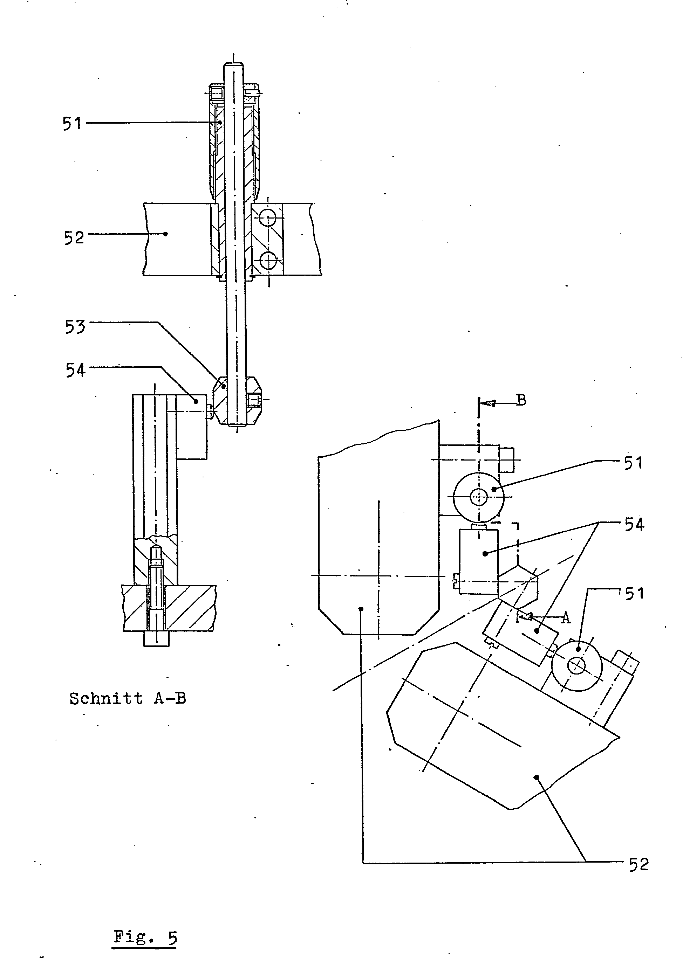

Das Motor-Getriebesystem ist in Fig. 4 dargestellt und arbeitet nach dem Prinzip des beidseitig angetriebenen Planetengetriebes. Der Schrittmotor (41) läuft mit einer elektronisch konstant eingestellten Drehzahl und übt am Zahnrad (43) ein Moment auf das Zahnrad (44) aus. Das Zahnrad (44) läuft somit im Zahnkranz (45). Treibt man nun den Zahnkranz (45) über den Zahnkranz (46) das Zahnrad (47) mit dem Schrittmotor (42), der gleichen Drehsinn und gleiche Drehzahl von Schrittmotor (41) besitzt, an, so bleibt das Zahnrad (44) auf einer Stelle stehen und rotiert nur noch um den Steg (48); Voraussetzung dafür ist die gleiche Zähnezahl der Zahnräder (44) und (47) sowie die gleiche Zähnezahl der Zahnkränze (45) und (46). Wird die Drehzahl eines Motors minimal verändert, so bewegt sich Zahnrad (44) im Zahnkranz (45) und führt zu einer Drehbewegung der Antriebswelle (49). Je nach Vorzeichen der Drehzahldifferenz zwischen Motor (41) und (42) ändert sich die Drehrichtung; für die Drehzahl der Antriebswelle (49) ist die Höhe der Drehzahldifferenz entscheidend.

PATENTANSPRÜCHE

1) Vorrichtung zur Prüfung von Werkstoffen auf Spannungsrißkorrosionsanfälligkeit mit einer Grundplatte, zwei Führungsstangen, einem oberen und einem unteren Querhaupt, einer Probenhalterung und einer Vorrichtung zum Dehnen der eingespannten Probe als Zugeinheit, dadurch gekennzeichnet, daß sie aus folgenden Elementen besteht:

1. Mehr als zwei Zugeinheiten, jede Zugeinheit mit:

    1.1  der Rohrführung des unteren Querhauptes (4), bestehend aus 4 Führungsmuttern (7) und 2 Rohren (5),

    1.2  der mit der Rohrführung des unteren Querhauptes (4) verbundenen Klemmvorrichtung (6), bestehend aus einer geschlitzten Führungsmutter der Rohrführung,

    1.3  der mit dem oberen (1) und dem unteren (4) Querhaupt verbundenen Probenschnellkupplungen (9) und (1)),

    1.4  dem Verbindungsflansch (13), der mit lösbaren Schrauben (16) mit dem Querhaupt (4) verbunden ist.

2. Dem unter der Grundplatte (3) angeordneten Antriebsverteilungsblock mit

    2.1  den Antriebsrädern (23), die jeweils aus einem Zahnrad für gleiche Dehngeschwindigkeiten oder einem Standgetriebe zur Geschwindigkeitsstaffelung bestehen

3. Dem dem Antriebsverteilungsblock und dem ihm vorgelagerten Aufsteckgetriebe vorgelagerten Motorgetriebe mit

    3.1 dem Antrieb durch 2 Schrittmotoren (41) und (42),

    3.2 den Sonnenrädern (43) und (45), wobei das Rad (43) durch Schrittmotor (41) und das Rad (45) durch den Motor (42) angetrieben wird,

    3.3 den 3 Planetenrädern (44), die durch die Drehbewegung um das Sonnenrad (43) die Antriebswelle (49) über den Steg (48) in positiver und negativer Drehrichtung bewegen.

2) Vorrichtung nach Anspruch 1, dadurch gekennzeichnet, daß sie aus 6 im Sechseck angeordneten Zugeinheiten besteht.

3) Vorrichtung nach Anspruch 1 + 2, dadurch gekennzeichnet, daß die Zugeinheit eine automatische Endabschaltung, bestehend aus einem Mikrometer (51), das am unteren Querhaupt (4) befestigt ist und am unteren Ende einen höhenverstellbaren Schaltkörper (55) besitzt, der den Endschalter (54) betätigt.

4) Vorrichtung nach Anspruch 1-3, dadurch gekennzeichnet, daß der Antriebsverteilungsblock eine Hubvorrichtung für die Antriebsräder zur Abtrennung der Antriebseinheit vom Restsystem, bestehend aus einer Zahnstange (32) auf der verlängerten Welle des Antriebsrades und einem eingreifenden Zahnrad (33) auf der Motorwelle (34) des Hubmotors, der auf der Grundplatte (3) angeordnet ist, aufweist.

5) Vorrichtung nach Anspruch 1-4, dadurch gekennzeichnet, daß die Drehzahl der Schrittmotoren durch elektronisch erzeugte Schrittfrequenz vorgegeben wird.

6) Vorrichtung nach Anspruch 5, dadurch gekennzeichnet, daß die Drehzahlsteuerung zum Betrieb mit konstanter oder zeitlich wechselnder Drehzahl durch eine aus einem Mikroprozessor und einem Speichergerät bestehenden Steuereinheit erfolgt.

Fig. 1

0020852

25a
24a
24c
25f
23c    A
25e

22
23a
25b
24b
25c
23b
25d

23c
21

23a

Schnitt A-B

Fig. 2

0020852

35

32

33

34

31

Fig. 3

Fig. 4

51

52

53

54

Schnitt A-B

B

51

54

A

51

52

Fig. 5

Europäisches
Patentamt

**EUROPÄISCHER RECHERCHENBERICHT**

0020852

Nummer der Anmeldung

EP 80 10 1016

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | FR - A - 1 550 802 (SCHWEIZERISCHE EIDGENOSSENSCHAFT VERTRETEN DURCH EIDG. FLUGZEUGWERK) <br><br> * Seite 2, linke Spalte, Zeile 19 bis Seite 2, rechte Spalte, Zeile 47; Figuren 1,2 * | 1,2 | G 01 N 3/16 |
| A | US - A - 4 018 080 (J.C. FLETCHER et al.) <br><br> * Spalte 6, Zeile 48 bis Spalte 8, Zeile 15; Figuren 1,2 * | 1 | |
| A | DE - A - 2 151 202 (M. QUATEMBER) <br><br> * Seite 7, Zeilen 4-30; Figur 1 * | 1 | RECHERCHIERTE SACHGEBIETE (Int. Cl.³) <br><br> G 01 N 3/00 <br> 3/08 <br> 3/16 <br> 3/18 <br> 17/00 |
| A | DE - B - 1 202 534 (VEB WERKSTOFF-PRÜFMASCHINEN, LEIPZIG) <br><br> * Spalte 3, Zeilen 12-21; Figur 1 * | 1 | |
| A | US - A - 3 374 665 (J.L. PRESTON) <br><br> * Spalte 1, Zeile 43 bis Spalte 2, Zeile 37; Figuren * | 1 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 16-09-1980 | ANTHONY |

EPA form 1503.1  06.78